# EUROPEAN PATENT APPLICATION

(11) **EP 1 840 540 A2**
(43) Date of publication of application: **03.10.2007**
(21) Application number: 07105371.4
(22) Date of filing: 30.03.2007
(51) Int. Cl.: G01G 19/414

(54) **Mail processing system**

(30) Priority: 31.03.2006 GB 0606457
(71) Applicant: PFE International Limited, Loughton, Loughton, Essex IG10 3TZ (GB)
(72) Inventor: Iddon, Robert Oliver, Loughton, Essex IG10 3TZ (GB); Ashworth, Peter James, Loughton, Essex IG10 3TZ (GB); Maher, Richard Stephen, Loughton, Essex IG10 3TZ (GB)
(74) Representative: Freeman, Jacqueline Carol

(57) **Abstract**

A mailing system comprising: a mail item creation station; means for assessing the weight of each mail item in a selected set of mail items; means for generating a digital signal representing the weight of each mail item; means for counting the number of mail items in said selected set and generating a digital signal representing said number; and means for communicating with a network and for sending said weight data signals and said number data signal over said network in a structured manner, to a postal service provider. Preferably the mailing items are pre-printed with a mail impression mark which may comprise a printed postage impression mark on a selected set of mail items, for example items in a particular weight range.

## Description

The present invention relates to the field of automatic mailing machines.

Automatic mailing machines are known in which documents may be folded, collated and stuffed into envelopes for mailing to recipients. Examples of such mailing machines are those manufactured by the Applicant and sold under the Registered Trade Marks AUTOMAILER, MAXIMAILER, MINIMAILER and many others.

Envelopes emerging from known mailing machines must then have stamps applied to them to pay for the postal service to deliver them. Such stamps may be purchased from the postal service as required and applied to individual envelopes by hand. This requires the user either to take the envelopes to a postal service retail outlet to weigh the envelopes and purchase the appropriate stamps, or to make advance purchases and to know in advance the required denominations of the stamps which will be required for envelopes, and other packets of different weights, and to apply the correct value stamp in each case. Business users have had the opportunity to print their own form of stamp using a franking machine. Such franking machines are kept in monetary credit by advance payments made by the user to the postal service and every time a stamp is printed by the user, the credit is debited. Franking machines are a versatile way to apply postage stamps to mail for business users because the correct denomination can be printed at the appropriate time. However franking machines require a relatively substantial advance monetary outlay to keep them in credit and still require each envelope to be dealt with individually, which is time consuming and labour intensive and thus expensive for business users.

It has been suggested to incorporate franking stations in mail folder and inserter machines but, because of the monetary value associated with the franking station, and the need for postal services to have complete control and ownership of the franking apparatus, these suggestions have not generally been successful to date.

An alternative method for applying postage is available from postal services. This is known as Printed Postage Impression (PPI) mailing. This entails the user registering with the postal services and applying to mail items PPI "labels", which are used as the equivalent of stamps, or franking marks, but are non-denominational, and relatively unadorned. Generally they identify the sender by a reference number, and identify the class of postal service to be used (e.g. first or second class post where appropriate). These "labels" may be directly printed on the carrier envelope, or printed as an adhesive label for packages. They have the advantage of being very cheap to produce for the postal services and versatile for the large volume business user.

The user applies a PPI label to each of a batch of envelopes and postal packets and produces a list of the mail items identifying the weight of each, which he then delivers to the postal service with the items to be mailed. The postal service then calculates the cost of the batch of items and sends an invoice to the user. This is advantageous to the user because he does not have to pay money in advance for use of the postal service. It is advantageous to the postal service because there is no need to maintain expensive franking machines or produce copy-resistant stamps and no need for the security necessary to protect them.

However producing the required listing of mail items for a batch of PPI items is labourious and previously had to be done by hand on specially prepared forms supplied by the postal services to prevent fraudulent use of such systems.

The present invention uses a PPI type mailing system in which the list of mail items is supplied in a structured form to the postal service over a network. This may either be directly from a mailing machine via a wide area network to the postal services computer systems, or via a local area network and the user's own computer systems to the postal services.

According to one aspect of the invention there is provided a mailing system comprising:
a mail item creation station;
means for assessing the weight of each mail item in a selected set of mail items;
means for generating a digital signal representing the weight of each mail item;
means for counting the number of mail items in said selected set; and for generating a digital signal representing said number;
means for communicating with a network and for sending said weight data signals and said number data signal over said network in a structured manner, to a postal service provider.

In a mailing system according to this first aspect envelopes already pre-printed with the PPI marks are used.

According to a second aspect of the present invention there is provided a mailing system comprising:
a mail item creation station;
means for printing a mail impression mark on a selected set of mail items;
means for assessing the weight of each mail item in said selected set and for generating a digital signal representing the weight of each mail item;
means for counting the number of mail impression marks printed and for generating a digital signal representing said number;
means for communicating with a network and sending said weight data signals and said number data signal over said network in a structured manner, to a postal service provider.

The mail item creation station may comprise:
an envelope feeder station;
a document feeder station; and
a stuffing station for inserting the document in the envelope.

One or more inserter stations may also be provided to add optional inserts to the document to be put into the envelope, e.g. leaflets, return postcards, or business reply envelopes.

Alternatively the mail item may comprise a pre-printed one piece document which is folded and sealed such that a message is inside the item and the address is on the outside.

A mail impression mark as intended herein is one which indicates that postage is payable to a postal carrier if the envelope carrying the mark is actually posted. This is distinct from a franking machine mark, or a traditional stamp, which indicate that postage has already been paid. The mail impression mark may be a PPI mark or any other similar mark approved by a postal service provider.

Such a system may be arranged to selectively print a mail impression mark on envelopes in dependence upon indicia marks on the document or the envelope to be mailed, e.g. dots or other simple marks may be printed in predetermined parts of a document to indicate whether the item is to be posted, or bar codes could be used. Alternatively the user could manually instruct the system regarding which envelopes are to be printed with the mail impression mark.

A further alternative would be for instructions to be supplied to the mailing machine from a computer operated by the user; the computer either forming part of the mailing machine or located nearby or at a remote location. Such instructions could be supplied via a local or wide area network or via the Internet.

The system may add the mail impression mark to the envelope before it is filled, while it is being filled, after it has been filled but before it is sealed, or after it has been sealed.

The system preferably records the number of mail impression marks printed during a predetermined session, for example while a particular batch of a predetermined number of mail items are produced, or during a particular time interval. This number may be stored in memory incorporated in the mailing machine itself or on a computer nearby or at a remote location.

The weight of each mail item is also assessed and recorded. The weight may be directly measured at a weighing station forming an integral part of the machine, or assessed by calculation taking into account the number of sheets making up the document in the envelope and their weight as well as the weight of the envelope and the weight of any inserts.

The weight data may also be stored in memory incorporated in the mailing machine itself or on a computer nearby or at a remote location.

The weight data is preferably used to identify the number of mail items in particular weight bands, and any and all of the data may be made available to a user via a screen, either at the machine or remote therefrom, or by a printout.

The weight and number data is preferably communicated via the network in a structured format determined by protocols dictated by the postal service provider. This ensures the efficacy and security of the data and that the data is readable by the intended receiver.

For a better understanding of the present invention, and to show how the same may be carried into effect, reference will now be made, by way of example, to the accompanying drawings, in which:
Figure 1 is a schematic illustration of a mailing system according to the present invention;
Figure 2 is a schematic illustration of a mailing machine incorporating the system of the present invention;
Figure 3 is a flow-diagram illustrating a first part of a method using the mailing machine of figure 2;
Figure 4 is a flow-diagram illustrating a second part of a method of using the mailing machine of figure 2.

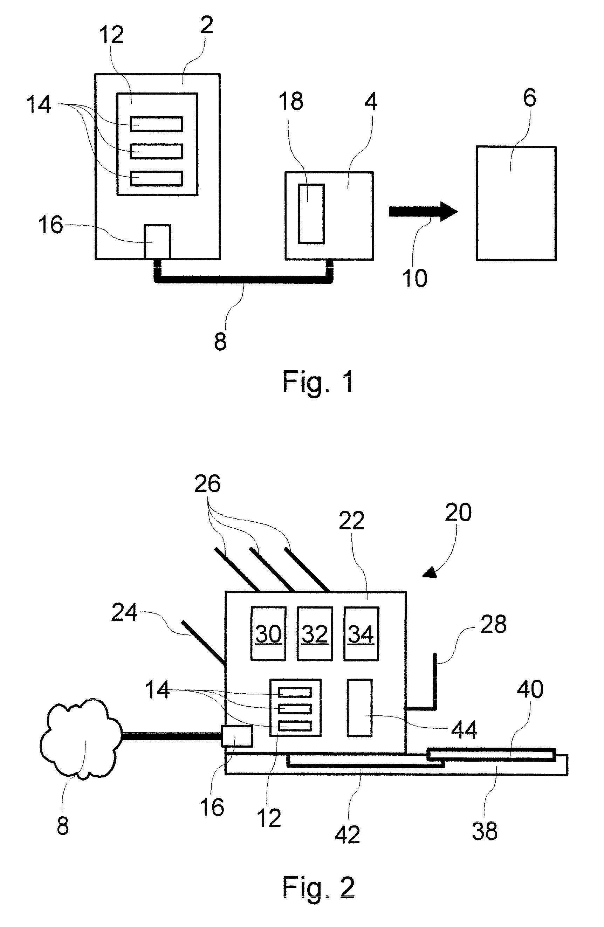

Figure 1 shows a computer 4 connected to a mailing machine 2 via a network 8 and an electronic docketing system 6 via a secure communications link 10, which would typically comprise an Internet protocol link.

The mailing machine 2 creates mail items, assesses the weight of each item, prints a mail impression mark on each item and counts the number of mail impression marks printed. It records the number and the weight of each item in internal memory 12 during a predetermined session such as over a particular time period. This number and weight data is used to create a structured electronic docket to send to the postal service provider. The mail impression marks may be standard Printed Postage Impression (PPI) marks or other marks recognized by postal service providers.

The mailing machine 2 is capable of creating multiple weight band logs 14 within the internal memory 12. A separate weight band log 14 is created for each charging weight threshold set by the postal service. Each weight band log 14 contains a count of the number of envelopes processed within the weight threshold since the last electronic docket was created. A new set of weight band logs 14 are created after each electronic docket is created, which signifies the end of one mailing period and the start of the next mailing period.

For example, if charging weight thresholds are set at 100 grams and 150 grams, and 70 envelopes are processed at various times during the course of one day (prior to mailing at the end of each day), of which 20 envelopes weighed less than 100 grams and 50 weighed between 100 grams and 150 grams, then the memory 12 of the mailing machine 2 will contain two weight band logs 14. The first weight band log 14 will contain data on the 20 envelopes weighing less than 100 grams and the second weight band log 14 will contain data on the 50 envelopes weighing between 100 grams and 150 grams.

The mailing machine 2 is connected to the network 8 via a network interface 16 such as an Ethernet port. The Internet protocol address of the mailing machine 2 may be set locally or, alternatively, acquired automatically using the Dynamic Host Configuration Protocol (DHCP) over the network 8.

The weight band logs 14 of the mailing machine 2 can be accessed over the network 8. The computer 4 on the network 8 can be configured to access the memory 12 and specifically the weight band logs 14 of the mailing machine 2, as a readable network resource, for example as a mapped network drive. Direct access to the weight band logs 14 enables the data to be accessed directly by the remote electronic docketing system 6, which may for example be the E*Pro^{™} docketing system used by Royal Mail, via the secure Internet connection 10. Of course, the mailing machine 2 may, alternatively, be directly connected to the computer 4 which has access to the network 8.

A program 18 running on the computer 4 may access the weight band logs 14 and collate and convert the data into the required protocol format of the electronic docketing system 6, for example the XML-based SOAP standard. The software can also allow for manually inserted envelopes or the removal of envelopes from the mailing stream by the user. The formatted data can then be transmitted directly to the electronic docketing system 6 over the secure Internet connection 10 without the need for further manual input from the user. The program 18 can retrieve any status and error reports generated by the electronic docketing system 6, and either automatically resolve any issues if possible, for example resend data if a transmission failure is reported, or display the report and prompt the user for further input if required. Any user input during the process can be recorded in a log file for later review.

The required features of the computer 4 described above can be integrated into the mailing machine 2, so that it is capable of directly communicating with the remote electronic docketing system 6 over the secure Internet connection 10. The mailing machine 2 can be equipped with a visual display and a data input means such as a keypad, to allow direct access to the configuration settings of the mailing machine 2 and the weight band logs 14. The mailing machine 2 can also be equipped with a simple web server allowing access to configuration settings and weight band logs 14 over a secure network connection 8.

The weight band logs 14 from previous mailing periods can be stored on the mailing machine 2 for future reference. The weight band logs 14 may also be written to or deleted remotely, over the network 8, or via an interface on the mailing machine 2, if the user enters the correct security credentials.

Alternatively, the weight band logs 14 may be created and stored directly on the computer 4, which would require fewer resources on the mailing machine 2.

Figure 2 illustrates a mailing machine 20 incorporating functionality according to the system of the invention. The mailing machine 20 comprises a folder-inserter machine 22 with an envelope hopper 24 for feeding envelopes into the folder-inserter machine 22, one or more document hoppers 26 for feeding documents and inserts, to be folded if required, and stuffed into the envelopes, and an envelope eject and collect hopper 28 for collecting the processed envelopes. The folder-inserter machine 22 comprises a mail impression printer 30, a folding station 32 for folding documents if required, an inserter 34 for stuffing documents into the envelopes, a network interface 16 for connecting the system to the network 8, memory area 12 in which to store the weight band logs 14, and a lookup table 44 used to calculate the correct postage band. The folder-inserter machine 22 can be mounted onto a moulded base 38 comprising an electronic weighing scale 40, the scale 40 communicating with the folder-inserter machine 22 via a USB cable 42 which can be powered either though the USB cable or an external power supply.

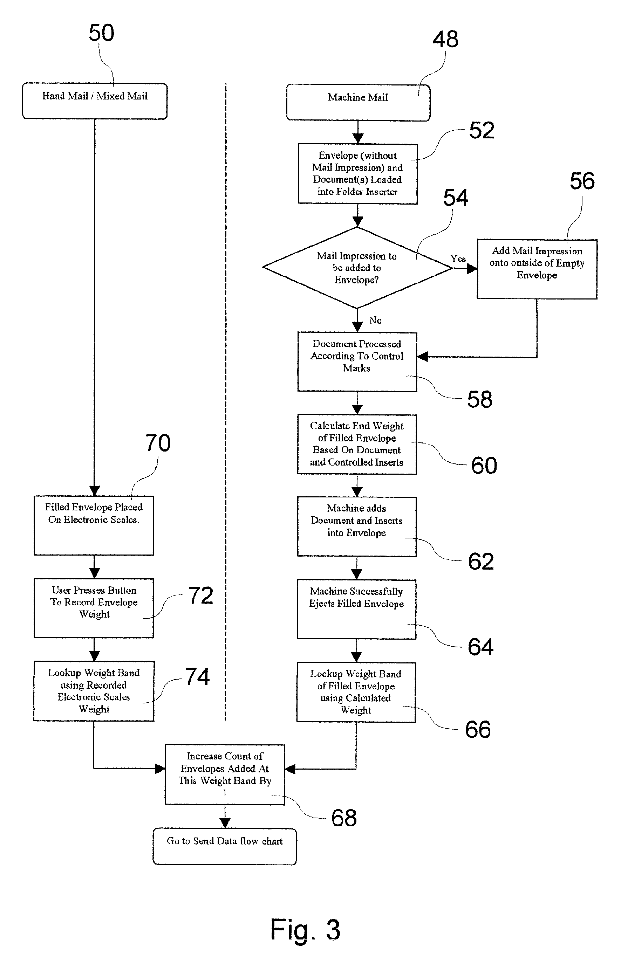

Figure 3 is a flow chart showing the process steps of a mailing machine such as that shown in Figure 2, illustrating methods for both machine processed mail 48 and hand processed mail, or mixed mail 50.

For machine processed mail 48, at stage 52 the envelopes without mail impressions are loaded into the envelope hopper 24, and the documents to be stuffed into the envelopes are load into the document hoppers 26. When the folder-inserter machine 22 is activated, an envelope is fed into the folder-inserter machine 22 from the envelope hopper 24. At stage 54 the folder-inserter machine 22 determines whether or not a mail impression is to be added to the envelope. This can be determined by input from an external source, such as a user, a program controlling the folder-inserter machine 22 over the network 8, or determined automatically by the folder-inserter machine 22 using optical recognition. If a mail impression is required then the impression is printed onto the outside of the empty envelope at stage 56 using the mail impression printer 30. It is advantageous to print the postal impression pre-stuffing as an empty envelope is flat and easier to manipulate within the folder-inserter machine 22. Of course, due to the independent nature of the postal impression mark, the postal impression can be printed on the envelope at any stage pre, post or during stuffing of the envelope. This is in contrast to franking marks which must be printed post stuffing, because a franking mark is dependent on the weight of the envelope. The relative simplicity, and low print quality requirements of mail with impression marks means that cheaper and simpler printing equipment can be used within the folder-inserter machine 22, when compared to other postal marking systems, for example franking. A further advantage over franking is that there is no requirement for additional hardware to manage a pre-pay postal account with the postal service provider when using PPI.

After the postal impression mark has been printed onto the envelope (if required), at stage 58 the documents to be inserted are fed into the folder-inserter machine 22 from the document hoppers 26 and processed according to control marks on the documents. If the documents are to be folded, then this action is performed by the folding station 32 within the folder-inserter machine 22.

Once the quantity and type of inserts are known, at stage 60 the end weight of the stuffed envelope can be calculated automatically by the folder-inserter machine 22 without the need to physically weight the stuffed envelope itself.

At stage 62 the folder-inserter machine 22 then stuffs the documents and inserts into the envelope using the inserter 34, and on successful completion of the insertion at stage 64 the folder-inserter machine 22 ejects the stuffed envelope into the envelope collection hopper 28 ready to be posted.

At stage 66 the folder-inserter machine 22 uses the lookup table 44 based on the charging scheme of the postal service provider, combined with the calculated weight of the stuffed envelope to determine the weight band for the envelope. At stage 68 this data is used to select the correct weight band log 14 within the memory 12, and increment the count within that weight band log 14 by 1. A new set of weight band logs 14 are created after each completed mail posting, therefore the count in each current weight band log 14 represents the quantity of envelopes ready for posting which fall within the specified weight band in the current mailing period.

It may be desirable to have the option of manually weighing envelopes or other postal items and include these items in the electronic docket at stage 50, for example if the items are too large to be processed by the folder-inserter machine 22. In such circumstances at stage 70 pre-stuffed envelopes can be placed on the electronic weigh scale 40, which has a button that when pressed at stage 72 transmits the weight reading to the folder-inserter machine 22 via the cable 42. The folder-inserter machine 22 then uses a combination of the lookup table 44 at stage 74 and the recorded weight to determine the weight band for the envelope. As with the machine processed mail 50, at stage 68 this data is used to select the correct weight band log 14 within the memory 12 and increment the count within that log by 1.

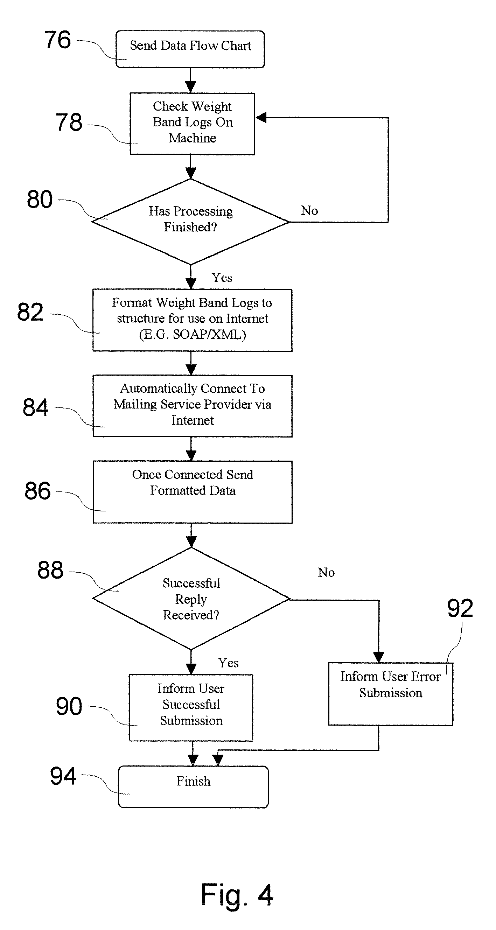

Figure 4 is a flow chart showing how the weight band logs 14 can be formatted and transmitted to the designated postal service provider. The formatting and transmission can be performed either by a separate computer on the network 8, or alternatively within the folder-inserter machine 22 itself. At the end of a mail period at stages 78 and 80, which would typically be at the end of the working day, the weight band logs 14 for that period are collated and formatted at stage 82 into a format suitable for the direct transmission of the data to the postal service provider. For example, the postal impression system used by the Royal Mail accepts data directly into its electronic docketing system 6 in SOAP format. Once the data is formatted correctly, at stage 84 a secure connection is automatically established with the postal service provider via the Internet connection 10 and the formatted data is transmitted to the postal service provider's electronic docketing system 6 at stage 86. The secure connection remains open at stage 88 until all of the data has been transmitted and an acknowledgment of the transmission is received from the postal service provider's electronic docketing system 6. If the transmission is successful then the user is notified at stage 90, the folder-inserter machine 22 records the successful transmission, and prepares to create a new set of weight band logs 14 for the next mailing period. If however an error is identified in the transmission process which cannot be resolved automatically, then at stage 92 the user is informed of the error so that manual corrective action can be taken. At stage 94 the cycle is completed and the machine is set in a state ready for the start of the next postal period.

In the examples described above the data for the electronic dockets is collected during the insertion phase of the mail stream. However it is also possible to use a program that collects and collates the required data during the pre-insertion phase by using pre processed print files. The print files are electronic versions of the documents to be printed and stuffed into the envelopes. The print files can be use to calculate the weight of the final stuffed envelope if the weight of the paper, envelopes and inserts is known. This data can be used to create the weight band logs 14 that are then collated and formatted to create an electronic docket for transmission to the electronic docketing system 6 at the end of the mailing period.

The present invention is not limited to traditional envelopes and can be used for a variety of postal packaging, for example pressure-seal envelopes and postcards.

## Claims

1. A mailing system comprising:
a mail item creation station;
means for assessing the weight of each mail item in a selected set of mail items;
means for generating a digital signal representing the weight of each mail item;
means for counting the number of mail items in said selected set and generating a digital signal representing said number; and
means for communicating with a network and for sending said weight data signals and said number data signal over said network in a structured manner, to a postal service provider.

2. A mailing system according to claim 1, wherein the mailing items are pre-printed with a mail impression mark.

3. A mailing system according to claim 1, comprising means for printing a mail impression mark on a selected set of mail items.

4. A mailing system according to claims 2 or 3, wherein the mail impression mark comprises a Printed Postage Impression (PPI) mark.

5. A mailing system according to any preceding claim, wherein the selected set of mail items comprises the mail items in a weight range determined by the postal service provider in which the monetary cost for delivering mail items is constant.

6. A mailing system according to any preceding claim, wherein the mail item creation station comprises at least one of a document feeder station, an envelope feeder station, and/or an inserter station.

7. A mailing system according to any one of the preceding claims, further comprising a stuffing station arranged for inserting the documents into envelopes.

8. A mailing system according to any one of claims 3 to 7, wherein the mail impression mark is printed prior to the mail item being stuffed.

9. A mailing system according to any one of claims 3 to 7, wherein the mail impression mark is printed during the stuffing of the mail item.

10. A mailing system according to any one of claims 3 to 7, wherein the mail impression mark is printed after the mail item has been stuffed but before the mail item is sealed.

11. A mailing system according to any one of claims 3 to 7, wherein the mail impression mark is printed after the mail item has been stuffed and sealed.

12. A mailing system according to any one of the preceding claims, wherein the mailing item comprises a pre-printed one piece document arranged to be folded and sealed such that a message is located on an inwardly facing side of the item and the address is located on an outwardly facing side of the item.

13. A mailing system according to any one or more of claims 3 to 12, wherein the mail impression mark is selectively printed in dependence upon indicia marks on the mail item.

14. A mailing system according to any one or more of claims 3 to 12, wherein the mail impression mark is selectively printed in dependence upon instructions manually input into the mailing system.

15. A mailing system according to any one or more of claims 3 to 12, wherein the mail impression mark is selectively printed in dependence upon instructions from a computer in communication with the mailing system.

16. A mailing system according to claim 15, wherein the computer is remote from the mail creation station.

17. A mailing system according to claim 15, wherein the computer is proximate the mail creation station.

18. A mailing system according to any preceding claim, wherein the means for assessing the weight of a mailing item comprises a weighing station.

19. A mailing system according to any one of claims 1 to 17, wherein the means for assessing the weight of a mailing item comprises calculations based on the known weight and quantity of envelopes, documents and inserts which form the mail item.

20. A mailing system according to any preceding claim, comprising means to record the quantity and weight of mail items weighed during a predetermined session.

21. A mailing system according to claim 20, wherein the recording means comprises memory proximate the weighing means.

22. A mailing system according to claim 20, wherein the recording means comprises memory in a computer remote from the weighing means.

23. A mailing system according to any one of the preceding claims, wherein the weight and count of the mailing items for each selected set is arranged in a structured format for display to a user.

24. A mailing system according to any one of the preceding claims, for display to a user via a visual display or by a printout.

25. A mailing system according to any one of claims 1 to 22, wherein the wherein the weight and count of the mailing items for each selected set is arranged in a structured format dictated by the postal service provider.
